Europäisches Patentamt

European Patent Office

Office européen des brevets

(19)

(11) Veröffentlichungsnummer: **0 164 063**
**B1**

(12) **EUROPÄISCHE PATENTSCHRIFT**

(45) Veröffentlichungstag der Patentschrift: **26.09.90**

(51) Int. Cl.⁵: **B 27 C 9/04,** B 23 Q 17/22

(21) Anmeldenummer: **85106612.6**

(22) Anmeldetag: **29.05.85**

(54) Abbundmaschine zum Bearbeiten von Brettern, Kanthölzern und dergleichen.

(30) Priorität: **29.05.84 DE 3420080**

(43) Veröffentlichungstag der Anmeldung:
**11.12.85 Patentblatt 85/50**

(45) Bekanntmachung des Hinweises auf die
Patenterteilung:
**26.09.90 Patentblatt 90/39**

(84) Benannte Vertragsstaaten:
**AT CH DE FR IT LI SE**

(56) Entgegenhaltungen:
**EP-A-0 115 353**
**DE-A-1 903 780**
**DE-A-2 241 948**
**DE-A-2 515 678**
**DE-A-2 822 095**
**DE-A-2 833 372**
**DE-B-1 062 525**
**DE-C- 325 346**
**DE-U-1 948 170**
**GB-A-1 026 617**
**US-A-1 469 995**
**US-A-1 653 916**
**US-A-3 094 224**

(73) Patentinhaber: **Hundegger, Hans**
**Kemptener Strasse 1**
**D-8941 Hawangen (DE)**

(72) Erfinder: **Frey, Konrad**
**Lärchenstrasse 2**
**D-8011 Faistenhaar (DE)**

(74) Vertreter: **Pfister, Helmut, Dipl.-Ing.**
**Buxacher Strasse 9**
**D-8940 Memmingen/Bayern (DE)**

EP 0 164 063 B1

Courier Press, Leamington Spa, England.

## Beschreibung

Die Erfindung betrifft eine Werkzeugmaschine zum Bearbeiten von länglichen Werkstücken mit einem Bearbeitungsaggregat und einer eine Rollenbahn oder dergleichen, auf der das Werkstück aufliegt, umfassenden Transporteinrichtung zum Fördern der Werkstücke nach Maßgabe der Längsposition der am Werkstück vorzunehmenden Bearbeitung zu dem Bearbeitungsaggregat, wobei die Transporteinrichtung ein am Maschinengestell parallel zu der Rollenbahn an einer Führungsbahn geführtes und motorisch angetriebenes Zugorgan (Schlitten) umfaßt, mit einem senkrecht zur Transportrichtung des Werkstücks verschiebbar geführten Stempel am Zugorgan (Schlitten), der an das Werkstück zu Ankuppelzwecken anpreßbar ist, und einer Steuereinrichtung zur Steuerung der Vorschubbewegung des Zugorgans (Schlitten).

Eine Werkzeugmaschine dieser Ausbildung ist in der DE-A 19 03 780 beschrieben. Diese Werkzeugmaschine dient zum maßgenauen Vorschieben von Werkstücken in die Schneidzone von Trennsägen und dergleichen, um beispielsweise lange Stangenprofile in viele gleichlange Stücke zu zerteilen. Ein Stempel am Schlitten erfaßt dabei das Werkstück und wird von einem aus Zylinder und Kolben bestehenden Hydraulikmotor beispielsweise bis zu einem einstellbaren Festanschlag vorgeschoben. Bei einer Variante hierzu ist der Anschlag auf einer Steuerstange des Ventils angeordnet, das den Vorschub steuert. Mittels dieser Einrichtung ist es möglich, das Werkstück immer um gleiche Längen voranzuschieben. Durch Veränderung der Anschläge können die Längen auch verändert werden.

Bei einer anderen Ausbildungsform, die ebenfalls in der DE-A 19 03 780 beschrieben ist, erfolgt der Vorschub mittels der angetriebenen Rollen der Rollenbahn bis zu einem einstellbaren Anschlag, der mit dem vorderen Ende des Werkstückes zusammenwirkt.

Bei einer Abbundmaschine anderer Ausbildung, die zum Bearbeiten von Brettern, Kanthölzern und dergleichen dient und die aus dem Prospekt der Firma Burmek, Verkstadsgatan 7, S-57100 Nässjö, bekannt geworden ist, werden die Werkstücke zu den einzelnen Bearbeitungsaggregaten dadurch gefördert, daß sie mit einer Stirnseite mittels angetriebener Reibrollen, die zwischen den Rollen der Rollenbahn angeordnet sind, gegen in die Rollenbahn einschwenkbare und längs dieser manuell einstellbare Anschläge geschoben werden. Diese Art der Längspositionierung der Werkstücke ist aber gleichwohl mit erheblichen Toleranzen behaftet, weil die gegen die Anschläge gefahrenen Werkstücke von diesen stets mehr oder weniger zurückprallen und außerdem insbesondere schrägangeschnittene Werkstücke, die als Stirnfläche nur eine schmale Kante aufweisen, zu dem durch die Stöße gegen die Anschläge auch noch erheblich deformiert, d.h. abgeplattet werden können. Ein vollautomatisiertes und stöhrungsfreies Bearbeiten von Werkstücken wie Bretter und Kanthölzer ist mit dieser Maschine daher nicht erreichbar, vielmehr erfordert diese bekannte Konstruktion eine ständige Überwachung durch eine entsprechend geschulte Bedienungsperson, wobei noch hinzukommt, daß sich die Anschläge und die Werkzeuge der einzelnen Bearbeitungsaggregate vor allem dann auch gegenseitig im Wege stehen können, wenn die Werkstücke im Bereich ihres in Transportrichtung vorderen Endes zu bearbeiten sind.

Es ist Aufgabe der Erfindung, eine Abbundmaschine zu schaffen, mit der es möglich ist, im Rahmen der für das Werkstück vorgeschriebenen Maßtoleranzen über die volle Länge der Werkstücke einen sicheren, vollautomatischen Bearbeitungsablauf zu erreichen.

Zur Lösung dieser Aufgabe geht die Erfindung aus von der Werkzeugmaschine der eingangs angegebenen Gattung und schlägt vor, diese Maschine entsprechend dem kennzeichnenden Teil des ersten Anspruches auszubilden.

Der Dorn, der am Stempel des Schlittens angeordnet ist, ermöglicht ein ausreichend positioniergenaues Fördern der Werkstücke zu den einzelnen Bearbeitungsaggregaten. Dabei ist die Führungsbahn für das Zugorgan bzw. den Schlitten derart ausgebildet, daß es möglich ist, alle Bearbeitungsaggregate zu erreichen, so daß diese an beliebiger Stelle auf die Werkstücke einwirken und diese bearbeiten können. Dabei ist lediglich der Schlittenweg zu bestimmen, was in an sich bekannter Weise entweder über entsprechend gesetzte Endschalter oder dieselben betätigende Nocken oder eine numerische Steuerung erfolgen kann, bei der der Schlittenweg mittels entsprechender Meßeinrichtungen oder mittels Schrittmotoren erfaßbar ist. Außerdem besteht bei dieser Lösung auch keine Gefahr, daß Teile der Fördereinrichtung mit den Bearbeitungsaggregaten bzw. mit deren Werkzeugen kollidieren, weil prinzipiell der Dorn das Werkstück an beliebiger Stelle aufnehmen und die Kuppelstelle zwischen Werkstück und Schlitten damit stets individuell so gelegt werden kann, daß sie nirgends in den Arbeitsbereich der einzelnen Bearbeitungswerkzeuge gerät.

Weitere vorteilhafte Ausgestaltungen der Erfindung sind Gegenstand der Unteransprüche, auf die verwiesen wird.

Ein Ausführungsbeispiel der Erfindung wird nachfolgend anhand der Zeichnung näher erläutert. In der Zeichnung zeigen:

Figur 1) Die Vorderansicht einer erfindungsgemäßen Abbundmaschine,

Figur 2) die Draufsicht auf die Maschine nach Figur 1,

Figur 3) die vergrößert dargestellte Vorderansicht des Schlittens der Fördereinrichtung der Maschine (Einzelheit a aus Figur 1),

Figur 4) die Draufsicht auf den Schlitten nach Figur 3,

Figur 5) den Schnitt A - B aus Figur 4 und

Figur 6) den Schnitt C - D aus Figur 5.

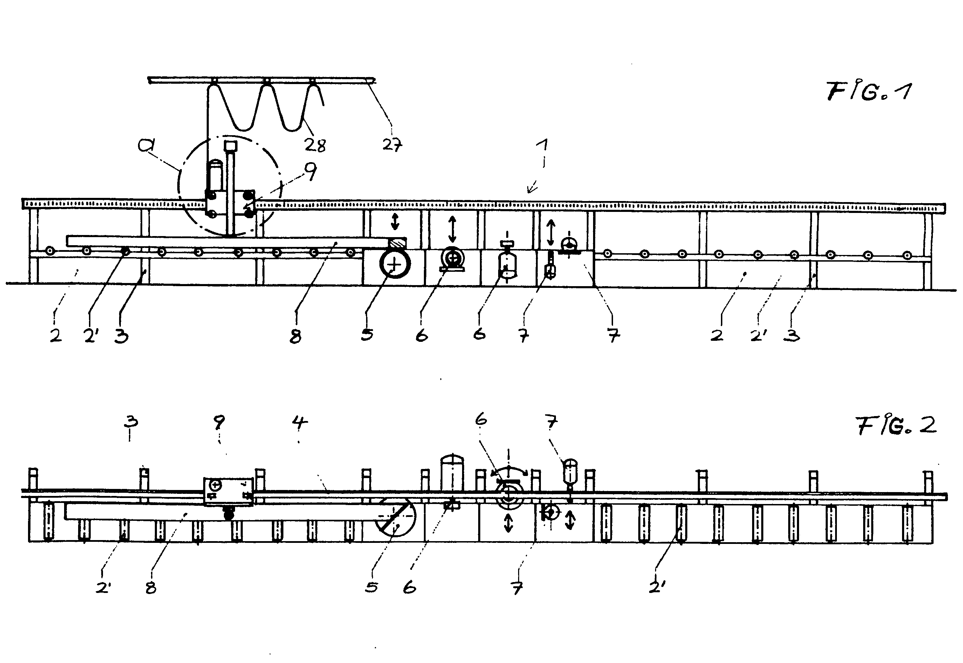

Die in den Figuren 1 und 2 dargestellte Abbundmaschine 1 umfaßt im wesentlichen ein aus einer horizontalen Rollenbahn 2 und vertikalen Stützen 3 mit einer an diesen befestigten Führungsbahn 4, die parallel zur Rollenbahn 2 angeordnet und aus einem Rohr mit rechteckigem Querschnitt gebildet ist, zusammengesetztes Maschinengestell 2, 3, 4, in dessen mittlerem Abschnitt je nach Bedarf verschiedene Bearbeitungsaggregate, z.B. ein Säge-, zwei Fräs- und zwei Bohraggregate 5, 6, 7 unterhalb der von den Rollen 2' der Rollenbahn 2 gebildeten Auflagefläche für das zu bearbeitende Werkstück B angeordnet sind.

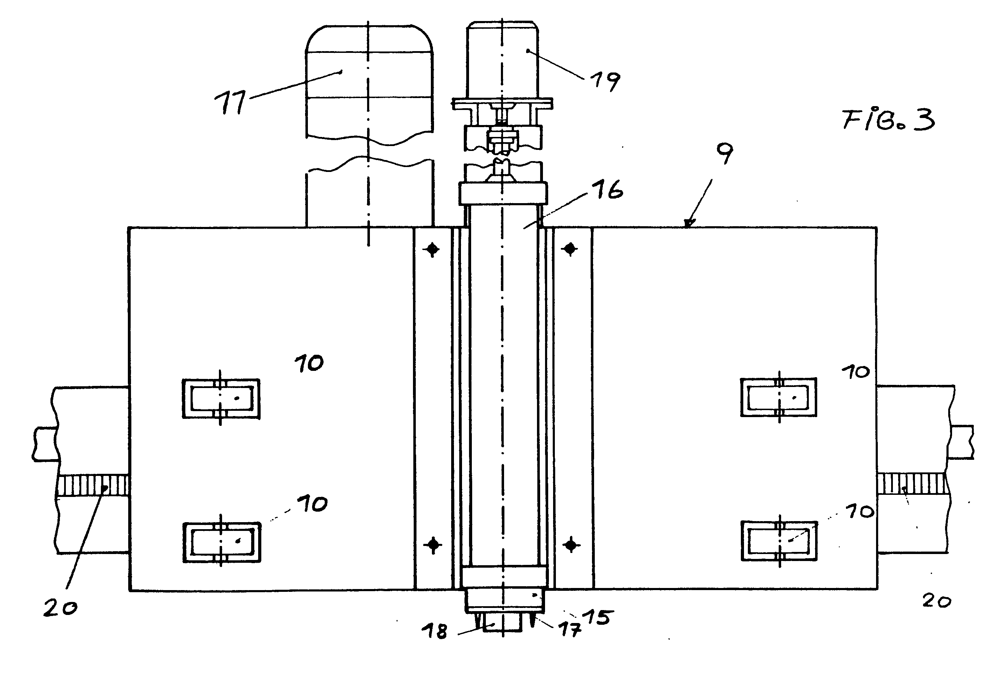

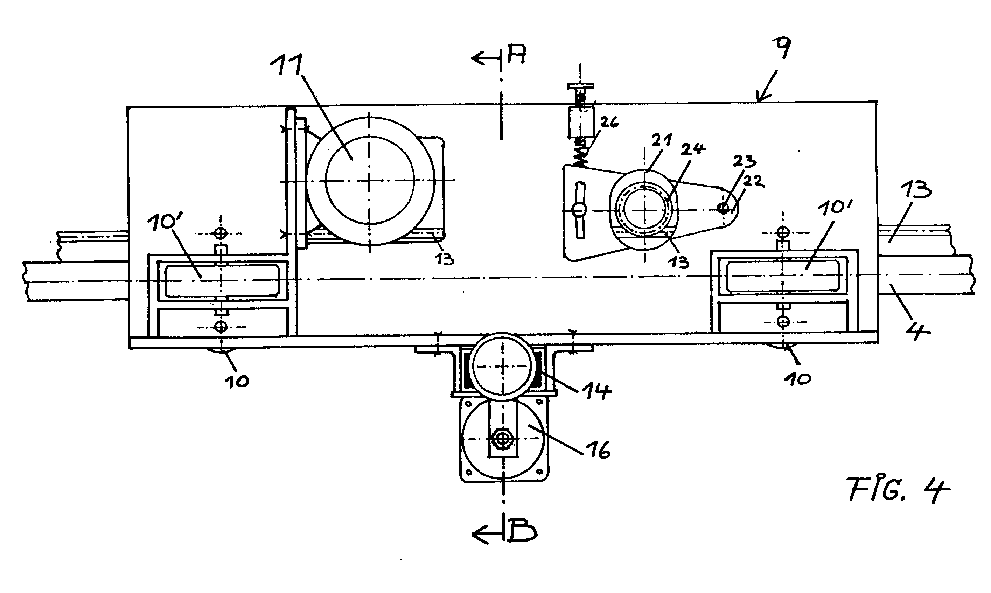

Wie die Figuren 3 bis 5 im einzelnen zeigen, trägt die Führungsbahn 4 einen mittels Rollen 10, 10' horizontal geführten Schlitten 9, der als Zugorgan zum FÖrdern des Werkstücks 8 nach Maßgabe der Lage der an dem Werkstück 8 herzustellenden Flächen, Kerben, Ausklinkungen, Zapfen, Bohrungen usw. zu den verschiedenen Bearbeitungsaggregaten 5, 6, 7 dient. Angetrieben wird der Schlitten 9 von einem Elektromotor 11, auf dessen Wellenstumpf 11' ein Ritzel 12 befestigt ist, das seinerseits spielfrei mit einer auf der Rückseite der Führungsbahn 4, befestigten Zahnstange 13 kämmt.

Der Schlitten 9 trägt eine Führungsbahn 14, in der ein Stempel 15 mittels einer Kolben-Zylinder-Einheit 16 vertikal verschiebbar geführt ist. Am dem Werkstück 8 zugekehrten Ende des Stempels 15 ist mind. ein vorzugsweise als schlanker Kegel ausgebildeter Dorn 17 befestigt, der sich in Vorschubrichtung des Stempels 15 erstreckt und als in das Werkstück 8 eindrückbares Kupplungsteil dient, welches das Werkstück 8 mit dem Schlitten 9 verbindet.

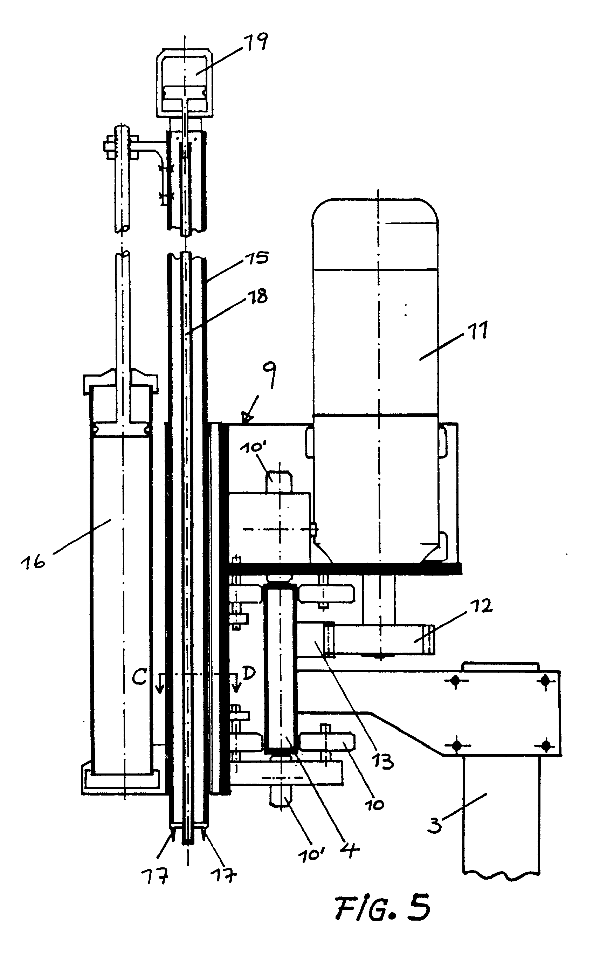

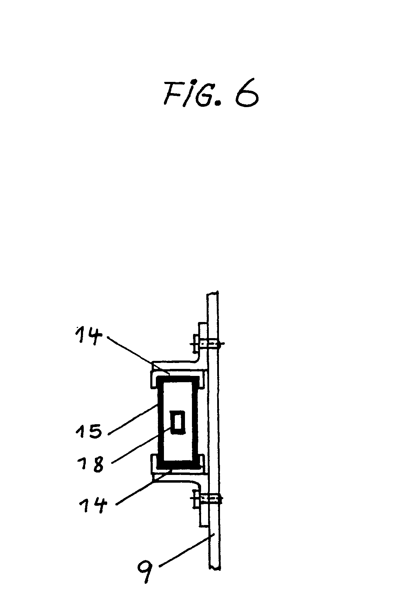

Wie am besten aus den Figuren 5 und 6 hervorgeht, ist der Stempel 15 aus einem im Querschnitt rechteckigen Rohr gebildet, in dem ein Abdrückstempel 18 geführt ist, der über eine zweite Kolben-Zylinder-Einheit 19 betätigbar ist, und dazu dient, am Ende der Bearbeitung das Werkstück 8 von dem Dorn 17 zu lösen.

Zum Einfahren des Schlittens 9 in bestimmte von der Lage der am Werkstück 8 herzustellenden Flächen, Kerben, Bohrungen usw. her vorgegebene Positionen ist zunächst für Handbetrieb an der Führungsbahn 4 ein Längenmaßstab 20 angebracht, dessen Nullpunkt vorteilhafter Weise auf die Lage eines der Bearbeitungsaggregate 5 bis 7, beispielsweise auf das Sägeaggregat 5 ausgerichtet ist, so daß sich die Skala des Maßstabs 20 von da aus nach beiden Seiten erstreckt.

Für den automatischen Betrieb ist darüber hinaus ein rotatorisch arbeitendes Wegmeßgerät 21 vorgesehen, das an einer um eine zur Achse des Wegmeßgeräts 21 parallele Achse 23 schwenkbaren Konsole 22 befestigt. Angetrieben wird das Wegmeßgerät 21 über ein Ritzel 24, das spielfrei mit der Zahnstange 13 kämmt, wozu die Konsole 22 von einer bezüglich ihrer Vorspannung einstellbaren Feder 26 beaufschlagt ist.

Die Energieversorgung des Schlittens 9 kann gemäß Figur 1 über an einer Schiene 27 verschiebbar aufgehängte Kabel 28 erfolgen, die auch die erforderlichen Steuerleitungen umfassen. Für den automatischen Betrieb ist die Maschine im übrigen mit einer nicht weiter dargestellten CNC-Steuerung verbunden, wobei diese auch ein Datensichtgerät umfassen kann, auf dessen Bildschirm synchron mit dem Bearbeitungsfortschritt der gesamte Bearbeitungsablauf symbolisch so dargestellt wird, daß die Bedienungsperson die Ausführung aller am Werkstück 8 vorgesehenen Bearbeitungsvorgänge genau verfolgen kann und zwar auch dann, wenn die Maschine beispielsweise im Rahmen eines Probedurchlaufs teilweise von Hand gesteuert oder mit Hilfe des Datensichtgerätes programmiert wird.

Die Steuereinrichtung zum positionieren des Zugorgangs bzw. Schlittens weist bei einer vorteilhaften Ausführungsform Endschalter auf, die bevorzugt als berührungslos arbeitende Sensoren vorgesehen sind.

Gemäß einer Weiterbildung der Erfindung umfaßt die Steuereinrichtung zum Positionieren des Zugorgangs bzw. des Schlittens ein Datensichtgerät, an dem insbesondere für Programmierzwecke laufend die jeweilige Position und momentan am Werkstück durchgeführte Operation ablesbar ist.

**Patentansprüche**

1. Werkzeugmaschine zum Bearbeiten von länglichen Werkstücken mit einem Bearbeitungsaggregat und einer eine Rollenbahn (2) oder dergleichen, auf der das Werkstück (8) aufliegt, umfassenden Transporteinrichtung zum Fördern der Werkstücke nach Maßgabe der Längsposition der am Werkstück vorzunehmenden Bearbeitung zu dem Bearbeitungsaggregat, wobei die Transporteinrichtung ein am Maschinengestell parallel zu der Rollenbahn (2) an einer Führungsbahn (4) geführtes und motorisch angetriebenes Zugorgan (9) umfaßt, mit einem senkrecht zur Transportrichtung des Werkstücks (8) verschiebbar geführten Stempel (15) am Zugorgan (9), der an das Werkstück (8) zu Ankuppelzwecken anpreßbar ist, und einer Steuereinrichtung zur Steuerung der Vorschubbewegung des Zugorgans (9), dadurch gekennzeichnet, daß bei einer Abbundmaschine zum Bearbeiten von Brettern, Kanthölzern und dergleichen der Stempel (15) einen in das Werkstück (8) einpreßbaren Dorn (17) aufweist, daß sich die Führungsbahn (4) über eine Mehrzahl von Bearbeitungsaggregaten (5, 6, 7) sowie in den Bereich vor und hinter den Bearbeitungsaggregaten erstreckt, und daß mittels der Steuereinrichtung das Zugorgan (9) nacheinander in mehrere vorgewählte Längspositionen positionierbar ist.

2. Werkzeugmaschine nach Anspruch 1, dadurch gekennzeichnet, daß der Antriebsmotor (11) des Zugorgans (9) ein Ritzel (12) aufweist, welches mit einer parallel zur Führungsbahn (4) verlaufenden Zahnstange (13) spielfrei kämmt.

3. Werkzeugmaschine nach einem oder beiden der vorhergehenden Ansprüche, dadurch gekennzeichnet, daß das Zugorgan ein Schlitten (9) ist und daß die Führung des Schlittens (9) als Wälzführung ausgebildet ist.

4. Werkzeugmaschine nach einem der vorhergehenden Ansprüche, dadurch gekennzeichnet, daß der Stempel (15) in einer am Zugorgan bzw. Schlitten (9) angebrachten Führungsbahn (14) angeordnet ist und von einer Kolbenzylindereinheit (16) angetrieben ist, deren Kraft einstellbar ist.

5. Werkzeugmaschine nach einem der vorhergehenden Ansprüche, dadurch gekennzeichnet, daß der Stempel (15) als Rohr ausgebildet ist, in dem ein von einer zweiten Kolbenzylindereinheit (19) angetriebener Abdrückstempel (18) zum Lösen der Werkstücke (8) vom Dorn (17) des Stempels (15) geführt ist.

6. Werkzeugmaschine nach einem der vorhergehenden Ansprüche, dadurch gekennzeichnet, daß die Steuereinrichtung zum Positionieren des Zugorgans bzw. Schlittens (9) Endschalter aufweist.

7. Werkzeugmaschine nach einem der vorhergehenden Ansprüche, dadurch gekennzeichnet, daß die Steuereinrichtung zum Positionieren des Zugorgans bzw. Schlittens (9) eine CNC-Steuerung umfaßt.

8. Werkzeugmaschine nach einem der vorhergehenden Ansprüche, dadurch gekennzeichnet, daß die Steuereinrichtung zum Positionieren des Zugorgans bzw. Schlittens (9) ein rotatorisch arbeitendes Wegmeßsystem (21) zum Messen des Schlittenweges aufweist, dessen Ritzel (24) spielfrei mit einer am Maschinengestell befestigten Zahnstange (13) kämmt.

9. Werkzeugmaschine nach Anspruch 8, dadurch gekennzeichnet, daß das Wegmeßsystem (21) an einer um eine zur Achse des Wegmeßsystems (21) parallele Achse (23) schwenkbare Konsole (22) befestigt ist, die mittels einer vorgespannten Feder (26) das Ritzel (24) des Wegmeßsystems (21) in die Zahnstange (13) drückt.

**Revendications**

1. Machine-outil pour usiner des pièces allongàes, comportant un groupe d'usinage et un dispositif transporteur comportant un transporteur à rouleaux (2) ou l'analogue, sur lequel est placée la pièce à usiner (8), pour transporter les pièces, selon la position longitudinale de l'usinage à effectuer sur la pièce, jusqu'au groupe d'usinage, le dispositif transporteur comportant un organe de traction (9) guidé sur le bâti de machine le long d'une voie de guidage (4), parallèlement au transporteur à rouleaux (2) et entraîné par moteur, la machine comportant sur l'organe de traction (9) un plongeur (15) pouvant être déplacé perpendiculairement au sens du transport de la pièce à usiner (8) et pouvant être appliqué par pression sur la pièce à usiner (8) à des fins d'accouplement, et un dispositif de commande pour commander le mouvement d'avance de l'organe de traction (9), caractérisée en ce que, dans une machine-outil combinée pour usiner des planches, bois équarris ou l'analogue, le plongeur (15) comporte une pointe (17) pouvant être enfoncée dans la pièce à usiner (8), en ce que la voie de guidage (4) s'étend sur une multiplicité de groupes d'usinage (5, 6, 7) ainsi que dans la zone située avant et après les groupes d'usinage, et en ce que l'organe de traction (9) peut être positionné successivement dans plusieurs positions longitudinales présélectionnées, au moyen du dispositif de commande.

2. Machine-outil selon la revendication 1, caractérisée en ce que le moteur d'entraînement (11) de l'organe de traction (9) comporte un pignon (12) qui engrène sans jeu avec une crémaillère (13) s'étendant parallèlement à la voie de guidage (4).

3. Machine-outil selon l'une des revendications précédentes, ou les deux, caractérisée en ce que l'organe de traction est un chariot (9) et en ce que le guidage du chariot (9) est réalisé sous forme de guidage à rouleaux.

4. Machine-outil selon l'une des revendications précédentes, caractérisée en ce que le plongeur (15) est disposé dans une voie de guidage (4) fixée sur l'organe de traction, ou chariot (9) et est actionné par un vérin (16) dont on peut régler la force.

5. Machine-outil selon l'une des revendications précédentes, caractérisée en ce que en ce que le plongeur (15) est réalisé sous forme de tube dans lequel est guidé un piston de dégagement (18) actionné par un deuxième vérin (19) pour dégager les pièces à usiner (8) de la pointe (17) du plongeur (15).

6. Machine-outil selon l'une des revendications précédentes, caractérisée en ce que le dispositif de commande pour positionner l'organe de traction, ou chariot, comporte des interrupteurs de fin de course.

7. Machine-outil selon l'une des revendications précédentes, caractérisée en ce que le dispositif de commande pour positionner l'organe de traction, ou chariot (9), est un commande numérique par ordinateur.

8. Machine-outil selon l'une des revendications précédentes, caractérisée en ce que le dispositif de commande pour positionner l'organe de traction, ou chariot (9), est un système de mesure de déplacement fonctionnant en rotation pour mesurer le déplacement du chariot, dont le pignon (24) engrène sans jeu avec une crémaillère (13) fixée sur le bâti de machine.

9. Machine-outil selon la revendication 8, caractérisée en ce que le système de mesure de déplacement (21) est fixé sur une console (22) pouvant pivoter autour d'un axe (23) parallèle à l'axe du système de mesure de déplacement (21), laquelle console presse le pignon (24) du système de mesure de déplacement (21) dans la crémaillère (13) au moyen d'un ressort (26) précontraint.

**Claims**

1. Machine tool for working longitudinal work pieces with a working unit and a means of transport, comprising a roller conveyor (2) or the like on which the work piece (8) is supported, to convey the work pieces according to the longitudinal position of the working process to be carried out on the work piece with regard to the working unit, said means of transport comprising a power driven feed unit (9) guided on a guideway (4) on the machine frame parallel with the roller conveyor (2), with a plunger (15) on the feed unit (9) guided in a manner to slide vertically to the direction of transport of the work piece (8) and which can be applied by pressure to said work piece (8) in order to be coupled to it, and a control device to control the feed motion of the feed unit (9), characterized in that in the case of a trimming machine used for working boards, squared timber and the like the plunger (15) shows a pin (17) that can be pressed into the work piece (8), in that the guideway (4) extends over a plurality of working units (5, 6, 7) as well as into the area in front of and behind the working units and in that the feed unit (9) can be positioned by means of the control device successively into several preselected longitudinal positions.

2. Machine tool according to claim 1, characterized in that the driving motor (11) of the feed unit (9) shows a pinion (12) which meshes without play the rack (13) arranged parallel with the guideway (4).

3. Machine tool according to one or two of the preceding claims, characterized in that the feed unit is a slide (9) and that the guiding device of the slide (9) is formed as a roller guideway.

4. Machine tool according to one of the preceding claims, characterized in that the plunger (15) is arranged in a guideway (14) provided in the feed unit or slide (9) and is driven by a piston-cylinder unit (16), the force of which is adjustable.

5. Machine tool according to one of the preceding claims, characterized in that the plunger (15) is shaped as a tube in which a forcing plunger (18) driven by a second piston-cylinder unit is guided for disengaging the work pieces (8) from the pin (17) of the plunger (15).

6. Machine tool according to one of the preceding claims, characterized in that the control unit shows limit switches for the positioning of the feed unit or slide (9).

7. Machine tool according to one of the preceding claims, characterized in that the control unit comprises a CNC control for the positioning of the feed unit or slide (9).

8. Machine tool according to one of the preceding claims, characterized in that the control unit comprises for the positioning of the feed unit or slide (9) a rotary operating position measuring system (21) for measuring the displacement of the slide, the pinion (24) of which meshes without play a rack (13) mounted on the machine frame.

9. Machine tool according to claim 8, characterized in that the position measuring system (21) is fixed to a support (22) pivoting about an axis (23) that is parallel with the axis of the position measuring system (21), said support pressing the pinion (24) of the position measuring system (21) into the rack (13) by means of a pretensioned spring (26).

FIG. 1

FIG. 2

EP 0 164 063 B1

Fig. 3

FIG. 4

FIG. 5

FIG. 6